# EUROPÄISCHE PATENTSCHRIFT

(11) **EP 2 895 816 B1**
(45) Veröffentlichungstag und Bekanntmachung des Hinweises auf die Patenterteilung: **11.10.2023**
(21) Anmeldenummer: 13745378.3
(22) Anmeldetag: 29.07.2013
(51) Int. Cl.: F41H 3/00, F41H 3/02

(54) **ADAPTIVE VISUELLE TARNUNG**
ADAPTIVE VISUAL CAMOUFLAGE
CAMOUFLAGE VISUEL ADAPTATIF

(30) Priorität: 17.09.2012 CH 16812012
(43) Veröffentlichungstag der Anmeldung: 22.07.2015
(73) Patentinhaber: SSZ Camouflage Technology AG, 6301 Zug (CH)
(72) Erfinder: SCHWARZ, René, 8105 Watt (CH)
(74) Vertreter: Rigling, Peter Daniel
(86) Internationale Anmeldenummer: PCT/EP2013/065861
(87) Internationale Veröffentlichungsnummer: WO 2014/040786

(56) Entgegenhaltungen:
- EP-A2- 2 386 815
- CH-A1- 704 144
- US-A1- 2007 190 368
- US-A1- 2009 154 777
- US-A1- 2009 252 913
- US-A1- 2010 088 797
- O'neill Timothy: "The Science of Digital Camouflage Design", , 31 December 2005 (2005-12-31), XP93005053, Retrieved from the Internet: URL:https://hyperstealth.com/digital-desig n/index.htm [retrieved on 2022-12-05]
- Cho Woon Jung ET AL: "Making Pixel Patterns Automatically for Camouflage - Using Color Information from Their Background : International Conference, HCI International 2011, Orlando, FL, USA, July 9-14, 2011, Proceedings, Part II" In: "Methods and Applications for Modeling and Simulation of Complex Systems : 18th Asia Simulation Conference, AsiaSim 2018, Kyoto, Japan, October 27-29, 2018, Proceedings", 1 January 2011 (2011-01-01), Springer Singapore, Singapore, XP93005066, ISSN: 1865-0929 ISBN: 978-981-1328-53-4 vol. 174, pages 98-101, DOI: 10.1007/978-3-642-22095-1_20, Retrieved from the Internet: URL:https://link.springer.com/content/pdf/ 10.1007/978-3-642-22095-1_20.pdf?pdf=inlin e%20link>
- O'neill Timothy: "The Science of Digital Camouflage Design", , 31 December 2005 (2005-12-31), XP093005053, Retrieved from the Internet: URL:https://hyperstealth.com/digital-desig n/index.htm [retrieved on 2022-12-05]

## Beschreibung

Die vorliegende Erfindung betrifft ein Verfahren zum visuellen adaptiven Tarnen von Objekten, gemäss dem Oberbegriff nach Anspruch 1, sowie eine Anordnung zum visuellen adaptiven Tarnen. CH704144A1 ist ein relevantes Dokument des Standes der Technik.

Die potentiellen und auch effektiven Einsatzgebiete, insbesondere im militärischen Bereich, haben sich in den letzten Jahren diversifiziert, sei dies der Einsatz im urbanen Gelände oder der Wechsel unterschiedlichster klimatischer Zonen in kürzester Zeit. Auf der einen Seite stellen die heutigen Armeen hohe Anforderungen bezüglich Mobilität. Auf der anderen Seite haben sich die technischen Möglichkeiten der Aufklärung und Zielzuweisung mit der Miniaturisierung von Sensoren und dem Aufkommen neuer Plattformen wie der kostengünstigen Minidronen stark erweitert. Die Anforderung nach effektiver Tarnung steigt damit auch. Gerade für die Tarnung im urbanen Gelände wurden in den letzten Jahren umfangreiche Studien angestellt, bei denen es sich zeigte, dass es kein wirklich universelles Tarnmuster für diesen Bereich gibt. Damit die Tarnung auch in Zukunft noch ein ernst genommenes Mittel ist und ihre Aufgabe erfüllen kann, muss auch für die Tarnung im urbanen Gelände eine Tarnmöglichkeit geschaffen werden, welche insbesondere im visuellen Bereich effizient ist und rasch verändernder Umgebungseindrücken, beispielsweise beim verschieben von Objekten, Rechnung trägt.

Die Aufgabe der vorliegenden Erfindung besteht im Bereitstellen einer effizienten Tarnung von Objekten, insbesondere im visuellen Bereich beispielsweise in urbaner Umgebung, wo herkömmliche universelle Tarnmuster weitgehendst untauglich sind.

Erfindungsgemäss wird ein Verfahren zum visuellen adaptiven Tarnen von Objekten gemäss dem Wortlaut von Anspruch 1 vorgeschlagen.

Vorgeschlagen wird, dass zum visuellen adaptiven Tarnen von Objekten der Hintergrund und/oder die Umgebung vor welchem oder in welcher sich das Objekt befindet, mittels Kamera oder einem Sensor-Array erfasst wird und auf einer Einrichtung zur Tarnung des Objekts als rechnerisch modifiziertes Abbild wiedergegeben wird.

Vorgeschlagen wird, dass Signaldaten der Kamera oder des Sensor-Array mind. bezüglich Intensität und Farbe in Echtzeit ausgewertet werden und in ein LED-Array eingegeben werden, welches LED-Array beispielsweise auf einem Paneel angebracht ist, welches auf oder vor dem zu tarnenden Objekt angeordnet ist. Mit anderen Worten werden die Signaldaten in Echtzeit beispielsweise bezüglich Farbe und Radiometrie ausgewertet und dienen als Input für das LED-Array, welches beispielsweise die wesentlichen Elemente wie Farbe und Intensität des Ursprungsbildes wiedergeben soll. Da die Position des Betrachters zum zu tarnenden Objekt nicht bekannt ist, darf das aufgenommene Bild nicht einfach eins zu eins auf das entsprechende LED Paneel ausgegeben werden, weil sonst der Bildverlauf wie z.B. der Horizont, oder auch senkrecht verlaufende Objektmerkmale nie mit dem Hintergrund zusammenpassen würden. D.h. auf dem LED-Paneel erfolgt keine eins zu eins Darstellung. Beispielsweise kann das aufgenommene Bild zu einem Muster verrechnet werden, wobei das aufgenommene Bild in Blöcke zu beispielsweise 4 x 4 Pixeln aufgeteilt wird und diese Bildblöcke an einer anderen Position im Bild platziert werden. Es wird nicht für jedes Bild ein neues Zufallsmuster errechnet, weil sonst bei gleichbleibenden Bildfolgen das Ausgabebild sich jedes Mal ändern würde. Das wiederum würde dem Betrachter sofort auffallen, weil das zu tarnende Objekt sich nicht bewegt. Somit wird sichergestellt, dass sich das Ausgabebild nur ändert, wenn sich das Kamerabild ändert. Dabei wertet eine Software und Steuerelektronik die gemessenen Daten online aus, beispielsweise durch Reduktion der Auflösung durch Mittelung bzw. Segmentierung und blockweise Randomisierung der Pixel und steuert das LED-Array an.

Weiter vorgeschlagen wird eine Anordnung zum visuellen adaptiven Tarnen von Objekten gemäss dem Wortlaut nach Anspruch 6, welche eine paneelartige Einrichtung aufweist, vorgesehen um auf oder vor das zu tarnende Objekt angeordnet zu werden, aufweisend das oben erwähnte LED-Array, um ein modifiziertes Abbild des Ursprungsbildes der Umgebung oder des Hintergrundes wiederzugeben, in welcher bzw. vor welchem sich das zu tarnende Objekt befindet.

Das LED-Array weist gemäss einer Ausführungsvariante Streifen oder Bündel von jeweils drei LEDs in Abständen von 3cm bis 10cm auf, welche in beiden Dimensionen zueinander angebracht sind. Weiter weist die Anordnung eine Kamera oder ein Sensor-Array auf zum visuellen Erfassen des Ursprungsbildes bzw. der Umgebung oder des Hintergrundes, wobei die erfassten Signaldaten als Input für das LED-Array dienen. Als Kamera verwendet wird beispielsweise eine CMOS-Kamera.

Die LED-Bündel oder -Streifen sind beispielsweise in einer Breite von 1cm auf einem luftdurchlässigen Textil angebracht. Dies beispielsweise um gleichzeitig die visuelle adaptive Tarnung mit einer adaptiven Tarnung im Infrarotbereich zu kombinieren, wie beispielsweise in der internationalen Patentanmeldung WO 2011/000679 beschrieben.

Weiter weist die Anordnung einen Rechner inkl. Bedienersoftware auf inklusive Ansteuerungsschnittstelle und Speisungseinheit, um die ausgewerteten Daten dem LED-Array im Paneel einzugeben.

Die Erfindung wird nun beispielsweise und unter Bezug auf die beigefügten Figuren näher erläutert.

Dabei zeigen:
Fig. 1 ein Objekt, welches in einem Gelände visuell adaptiv zu Tarnen ist und
Fig. 2 schematisch die adaptive visuelle Tarnung des Objektes aus Figur 1 durch Miteinbezug des Geländes gemäss der vorliegenden Erfindung.

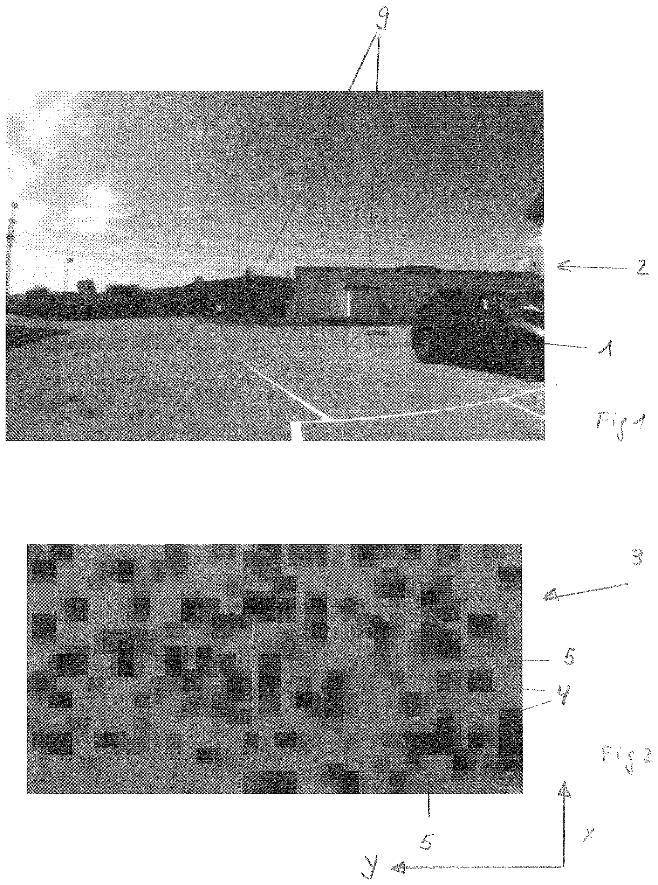

Figur 1 zeigt eine Parkplatzlandschaft mit, unter anderem einem parkierten Automobil 1, welche zumindest visuell zu erfassen ist, um allfällige Militärische Objekte in diesem Bereich zu tarnen. Die Tarnung soll mit bspw. einem Paneel 3 erfolgen, auf welchem die erfindungsgemäss vorgeschlagenen LED-Arrays 4 in Streifen sowohl in X- wie auch in Y-Richtung 5 auf dem Paneel 3 verlaufen. Neben einem zu tarnenden beispielsweise militärischen Fahrzeug 1 auf dem Parkplatzgelände 2 befinden sich ggf. weitere Objekte, wie weitere Fahrzeuge, sowie im Hintergrund Häuser und Gelände 9, welche nun erfindungsgemäss zu erfassen sind, um als Tarnung des Objektes 1 verwendet zu werden.

Figur 2 zeigt schematisch das Tarnmuster 3, berücksichtigend das Parkplatzgelände 2 zur Tarnung des Objektes 1 in der Parkplatzumggebung, welches Tarnmuster auf einem LED-Paneel wiedergegeben wird. Durch das visuelle Erfassen des Geländes 2 und der Objekte 9, beispielsweise mittels Kameras oder einer andersartig geeigneten Sensoroptik, werden diese mittels des LED-Arrays 4 auf dem Paneel 3 visuell dargestellt. Mittels Paneel 3 kann nun das Fahrzeug 1 wirkungsvoll getarnt werden.

Zunächst wird mit einer Kamera ein Bild aufgenommen und an den Zentralrechner zur Weiterverarbeitung eingelesen.

In einem ersten Schritt wird das Bild in Bezug auf Intensität und Farbe mittels llok-up table oder Modulationstransferfunktion kalibriert. Danach wird das Bild in Blöcke aufgeteilt und diese randomisiert, wie in Fig. 2 erkennbar. Da der Himmel meist stört, werden Pixel, welche dem Himmel zugeordnet werden können, durch mittlere Pixel aus dem Hintergrund ersetzt. Das Bild wird dann noch auf die Dimension der entsprechenden LED-arrays umformiert.

Damit kann das beispielsweise Fahrzeug 1 effizient beispielsweise in urbaner Umgebung mittels einem davor platzierten Paneel 3 getarnt werden, indem die Umgebung mindestens in Bezug auf Intensität und Farbe auf das Objekt übertragen wird.

Gemäss einem Ausführungsbeispiel wurde ein LED-Raster verwendet von mindestens 3cm bis 10cm Abstand in X- und Y-Richtung. Beim LED-Typ handelt es sich beispielsweise um Multichip RGB (rot-grün-blau). Die Leistung beträgt ca. 70W/m².

Der RGB-LED-Streifen muss jeweils seriell ansteuerbar sein. Die Bilddaten welche durch den Streifen geschoben werden dürfen nur angezeigt werden, wenn die gewünschte LED-Position erreicht wird. Dies muss beispielsweise mit einem entsprechenden Bus-Kommando geschehen.

Die RGB-LEDs sind beispielsweise dimmbar (8bit,PWM)und das LED-Raster und die Helligkeit entsprechen der Mindestanforderung von 100mm Raster und ca. 70W/m² pro Quadratmeter.

Das Paneel 3 mit den LED-Arrays 4 ist dabei beispielsweise kombiniert in seiner Funktion mit einer IR-adaptiven Tarnung, wie bereits oben erwähnt und bekannt aus der WO 2011/000679. Das LED-Array wird dadurch aufgebaut, dass einzelne LED-Streifen von ca. 1cm Breite auf ein luftdurchlässiges Textil angebracht werden. Der Abstand zwischen den einzelnen Zeilen beträgt 3cm bis 10cm. Dadurch, dass ein genügender Abstand zwischen den Zeilen besteht, kann die Luft nach wie vor durch das Gewebe strömen. Somit lassen sich die Funktionen von IR-adaptiven Paneelen und LED-Streifen zu einem System von IR-visadaptivem Tarnsystem kombinieren.

Bei der unter Bezug auf die beiden Figuren 1 und 2 schematisch beschriebenen Tarnung eines Objektes handelt es sich selbstverständlich nur um ein Beispiel, welches in x-beliebiger Art und Weise abgeändert, verändert oder durch weitere darzustellende Objekte erweitert bzw. ergänzt werden kann. So können zusätzlich zu den erwähnten Objekten auch andere Objekte wie Telefonkabinen, Strassenlaternen, Abfallcontainer, etc. visuell erfasst werden, um auf dem Paneel mittels dem LED-Array dargestellt zu werden. Im Weiteren muss es sich selbstverständlich nicht um ein zweidimensionales Paneel oder Textil mit dem LED-Array handelt, wie in Bezug auf Figur 2 beschrieben, sondern die Tarnanordnung kann auch dreidimensional ausgebildet sein entsprechend dem zu tarnenden Objekt. Im Falle eines Fahrzeuges kann die Tarnung hüllenartig ausgebildet sein, angepasst für die Tarnung eines Front- oder eines Heckbereiches, für die Tarnung eines Seitenteiles oder für die Tarnung des Daches. Sinnvollerweise werden Grundformen für die Tarnung angeboten, welche für die Tarnung eines Objektes verwendet werden können.

Wesentlich ist, dass das zu tarnende Objekt sich von der Umgebung nicht abhebt und andererseits das für die Tarnung verwendete Paneel sich visuell gut in die Umgebung einordnen lässt.

## Patentansprüche

1. Verfahren zum visuellen adaptiven Tarnen von Objekten, wobei der Hintergrund und/oder die Umgebung (2), vor welchem oder in welcher sich das Objekt (1) befindet, mittels Kamera oder einem Sensor-Array als Signaldaten erfasst werden, die ausgewertet auf einem LED-Array (4) wiedergegeben werden, wobei die Signaldaten in Farbe und Intensität des Hintergrundes mittels Steuerelektronik online durch Reduktion der Auflösung durch Mittelung bzw. Segmentierung und blockweise Randomisierung der Pixel ausgewertet, erfasst und zu einem Blockmuster verrechnet und auf einer Einrichtung (3) zur Tarnung des Objektes mindestens in Bezug auf Intensität und Farbe durch Ansteuern des LED-Arrays (4) wiedergegeben werden.

2. Verfahren nach Anspruch 1, **dadurch gekennzeichnet, dass** die Signaldaten in Farbe und Radiometrie ausgewertet werden und als Input dienen für das LED-Array (4), wobei durch Kalibration des Gesamtsystems bestehend aus Kamera (Sensor), Led-array (4) und Paneel (3) sichergestellt wird, dass mindestens die Intensität des Hintergrundes mit einer effektiv vom Paneel emittierten Intensität übereinstimmt.

3. Verfahren nach Anspruch 1, **dadurch gekennzeichnet, dass** die Signaldaten in Farbe und Radiometrie ausgewertet werden und als Input dienen für das LED-Array (4), wobei durch Kalibration des Gesamtsystems bestehend aus Kamera (Sensor), Led-array (4) und Paneel (3) sichergestellt wird, dass mindestens die Farbe des Hintergrundes mit einer effektiv vom Paneel emittierten Intensität übereinstimmt.

4. Verfahren nach einem der Ansprüche 1 bis 3, **dadurch gekennzeichnet, dass** die Signaldaten in einem Rechner inklusive Bedienersoftware ausgewertet werden und über eine Ansteuerungsschnittstelle und Speisungseinheit dem LED-Paneel (4) eingegeben werden.

5. Verfahren nach einem der Ansprüche 1 bis 4, **dadurch gekennzeichnet, dass** zunächst mit einer Kamera ein Bild des zu tarnenden Objektes und der Umgebung aufgenommen und an einen Zentralrechner zur Weiterverarbeitung eingelesen wird, in einem weiteren Schritt das Bild in Bezug auf die Intensität und Farbe mittels look-up table oder Modulationstransferfunktion kalibriert wird und danach das Bild in Blöcke aufteilt und diese randomisiert werden.

6. Anordnung zum visuellen adaptiven Tarnen von Objekten mittels einem Verfahren nach einem der Ansprüche 1 bis 5, **gekennzeichnet durch** eine paneelartige Einrichtung (3), vorgesehen um auf oder vor das zu tarnende Objekt (1) angeordnet zu werden, aufweisend ein LED-Array (4), um ein modifiziertes Abbild des Ursprungsbildes der Umgebung oder des Hintergrundes wiederzugeben, in welcher oder vor welchem sich das zu tarnende Objekt befindet, wobei Mittel zum Auswerten von Signaldaten in Farbe und Intensität des Hintergrundes mittels Steuerelektronik online durch Reduktion der Auflösung durch Mittelung bzw. Segmentierung und blockweise Randomisierung der Pixel vorgesehen sind, um das LED-Array (4) anzusteuern.

7. Anordnung nach Anspruch 6, **dadurch gekennzeichnet, dass** die LEDs in jeweils Bündel oder Streifen von 3 LEDs in Abständen von ca. 3cm bis 10cm angeordnet sind.

8. Anordnung nach einem der Ansprüche 6 oder 7, **dadurch gekennzeichnet, dass** mindestens eine Kamera oder ein Sensor-Array vorgesehen ist zum visuellen Erfassen des Ursprungsbildes, wobei die erfassten Signaldaten als Input für das LED-Array dienen.

9. Anordnung nach Anspruch 8, **dadurch gekennzeichnet, dass** es sich bei der Kamera um eine sogenannte CMOS-Kamera handelt.

10. Anordnung nach einem der Ansprüche 7 bis 9, **dadurch gekennzeichnet, dass** die LED-Streifen von ca. 1cm Breite auf einem luftdurchlässigen Textil angebracht sind und der Abstand zwischen den einzelnen Zeilen 3cm bis 10cm beträgt, wodurch ein genügender Abstand zwischen den Zeilen besteht, damit Luft nach wie vor durch das Gewebe strömen kann.

11. Anordnung nach einem der Ansprüche 6 bis 10, **dadurch gekennzeichnet, dass** die visuelle adaptive Tarnung mit adaptiver Tarnung im Infrarotbereich kombiniert ist.

## Claims

1. A method for visually adaptively camouflaging of objects, whereas the background and/or the environment (2), before which or in which the object (1) is positioned, is captured as signal data by using a camera or a sensor array, which signal data are evaluated and reproduced on a LED-array (4), that the signal data are evaluated online in color and intensity of the background by means of control electronics by reducing the resolution by averaging or segmentation and block by block randomization of the pixels, converted into a block pattern and reproduced on a device (3) for camouflaging the object at least in terms of intensity and color by driving the LED-array (4).

2. The method according to claim 1, **characterized in that** the signal data are evaluated in color and radiometry and serve as input to the LED array (4), ensuring by calibration of the overall system consisting of camera (sensor), LED array (4) and panel (3) that at least the intensity of the background corresponds to an effective intensity emitted by the panel.

3. The method according to claim 1, **characterized in that** the signal data are evaluated in color and radiometry and serve as input to the LED array (4), ensuring by calibration of the overall system consisting of camera (sensor), LED array (4) and panel (3) that at least the color of the background corresponds to an effective intensity emitted by the panel.

4. The method according to any of claims 1 to 3, **characterized in that** the signal data are evaluated in a calculator comprising user software and are fed to the LED panel (4) via a driver interface and power supply unit.

5. The method according to any one of claims 1 to 4, **characterized in that** an image is initially captured of the object to be camouflaged and the surrounding with a camera, that the captured image is read into a central computer for further processing, that, in a further step, the image is calibrated using look-up table or modulation transfer function in respect to the intensity and color, and that the image is then divided into blocks which are randomized.

6. An arrangement for adaptively visually camouflaging objects by means of a method according to any one of claims 1 to 5, **characterized by** a panel-like device (3), provided by or arranged in front of the object (1) to be camouflaged, comprising an LED array (4) to reproduce a modified image of the original image of the environment or of the background, in which or in front of which the object to be camouflaged is positioned, whereas means for evaluating of signal data online in color and intensity of the background by means of control electronics to reduce the resolution by averaging or segmentation and block by block randomization of the pixels to drive the LED-array (4) .

7. The arrangement according to claim 6, **characterized in that** the LEDs are arranged in bundles or strips of 3 LEDs at intervals of about 3cm to 10cm.

8. The arrangement according to claim 6 or 7, **characterized in that** at least a camera or a sensor array is provided for visually recording the original image, wherein the captured signal data are used as input for the LED array.

9. The arrangement according to claim 8, **characterized in that** a so-called CMOS camera is used as camera.

10. The arrangement according to one of claims 7 to 9, **characterized in that** the LED strips having a width of approximately 1 cm are mounted on an air-permeable fabric and the distance between the individual lines is 3 cm to 10 cm, whereby a sufficient distance between the lines is obtained so that air can still flow through the fabric.

11. An arrangement according to any one of claims 6 to 10, **characterized in that** the visual adaptive camouflage is combined with adaptive camouflage in the infrared region.

## Revendications

1. Procédé de camouflage visuel adaptatif d'objets, dans lequel l'arrière-plan et/ou l'environnement (2) devant lequel ou dans lequel se trouve l'objet (1) sont saisis au moyen d'une caméra ou d'un réseau de capteurs sous la forme de données de signaux qui, une fois évaluées, sont reproduites sur un réseau de LED (4), dans lequel les données de signaux en termes de couleur et d'intensité de l'arrière-plan sont évaluées en ligne au moyen d'un système électronique de commande par réduction de la résolution par moyennage ou par segmentation et randomisation par blocs des pixels, calculées en un modèle de bloc et reproduites sur un dispositif (3) pour le camouflage de l'objet au moins en ce qui concerne l'intensité et la couleur par commande du réseau de LED (4).

2. Procédé selon la revendication 1, **caractérisé en ce que** les données de signal sont évaluées en couleur et en radiométrie et servent d'entrée pour le réseau de LED (4), le calibrage de l'ensemble du système composé de la caméra (capteur), du réseau de LED (4) et du panneau (3) permettant de garantir qu'au moins l'intensité de l'arrière-plan correspond à une intensité effectivement émise par le panneau.

3. Procédé selon la revendication 1, **caractérisé en ce que** les données de signal sont évaluées en couleur et en radiométrie et servent d'entrée pour le réseau de LED (4), le calibrage de l'ensemble du système composé de la caméra (capteur), du réseau de LED (4) et du panneau (3) garantissant qu'au moins la couleur de l'arrière-plan correspond à une intensité effectivement émise par le panneau.

4. Procédé selon l'une des revendications 1 à 3, **caractérisé en ce que** les données de signal sont évaluées dans un ordinateur, y compris un logiciel de commande, et sont entrées dans le panneau à LED (4) par l'intermédiaire d'une interface de commande et d'une unité d'alimentation.

5. Procédé selon l'une des revendications 1 à 4, **caractérisé en ce que** tout d'abord une image de l'objet à camoufler et de l'environnement est prise avec une caméra et lue sur un ordinateur central pour le traitement ultérieur, dans une autre étape l'image est calibrée en ce qui concerne l'intensité et la couleur au moyen d'une table de look-up ou d'une fonction de transfert de modulation et ensuite l'image est divisée en blocs et ceux-ci sont randomisés.

6. Dispositif pour le camouflage visuel adaptatif d'objets au moyen d'un procédé selon l'une des revendications 1 à 5, **caractérisé par** un dispositif en forme de panneau (3) prévu pour être placé sur ou devant l'objet (1) à camoufler, comprenant un réseau de LED (4) pour reproduire une image modifiée de l'image d'origine de l'environnement ou de l'arrière-plan dans lequel ou devant lequel se trouve l'objet à camoufler, des moyens sont prévues pour évaluer des données de signal en couleur et en intensité de l'arrière-plan au moyen d'une électronique de commande en ligne par réduction de la résolution par moyennage ou segmentation et la randomisation par blocs des pixels, afin de commander le réseau de LED (4).

7. Dispositif selon la revendication 6, **caractérisé en ce que** les LED sont disposées en faisceaux ou en bandes de 3 LED à des distances d'environ 3 cm à 10 cm.

8. Dispositif selon l'une des revendications 6 ou 7, **caractérisé en ce qu'**au moins une caméra ou un réseau de capteurs est prévu pour détecter visuellement l'image d'origine, les données de signal détectées servant d'entrée pour le réseau de LED.

9. Dispositif selon la revendication 8, **caractérisé en ce que** la caméra est une caméra dite CMOS.

10. Dispositif selon l'une des revendications 7 à 9, **caractérisé en ce que** les bandes de LED d'une largeur d'environ 1 cm sont montées sur un textile perméable à l'air et **en ce que** la distance entre chaque ligne est comprise entre 3 cm et 10 cm, ce qui laisse un espace suffisant entre les lignes pour que l'air puisse continuer à circuler à travers le tissu.

11. Dispositif selon l'une des revendications 6 à 10, **caractérisé en ce que** le camouflage adaptatif visuel est combiné avec un camouflage adaptatif dans le domaine infrarouge.
